# EUROPÄISCHE PATENTSCHRIFT

(11) **EP 1 013 237 B1**
(45) Veröffentlichungstag und Bekanntmachung des Hinweises auf die Patenterteilung: **21.06.2006**
(21) Anmeldenummer: 99124982.2
(22) Anmeldetag: 15.12.1999
(51) Int. Cl.: A61C 8/00

(54) **Montagesatz mit einem Zahnersatz-Implantat sowie Aufnahmegefäss hierfür**
Dental implant mounting assembly as well as holding container therefor
Ensemble de montage avec implant dentaire, ainsi que son conteneur

(30) Priorität: 23.12.1998 DE 19860060
(43) Veröffentlichungstag der Anmeldung: 28.06.2000
(73) Patentinhaber: BEGO Implant Systems GmbH & Co. KG, 28359 Bremen (DE)
(72) Erfinder: Rose, Ingo, 28355 Bremen (DE); Erlenmayer, Udo, 28865 Lilienthal (DE)
(74) Vertreter: Eisenführ, Speiser & Partner

(56) Entgegenhaltungen:
- WO-A-98/26726
- WO-A-98/53755
- US-A- 5 062 800

## Beschreibung

Die Erfindung betrifft einen Montagesatz mit einem Dentalimplantat zur Befestigung von Zahnersatz am Kiefer, bei dem das Implantat mittels einer zentrischen Verschraubung mit einem Einbringpfosten verbunden ist, welcher Mittel zu seiner Halterung in einem das Implantat konzentrisch umgebenden Aufnahmegefäß aufweist, die aus einem zylindrischen Abschnitt und einer in Entnahmerichtung anschließenden Schulter bestehen, welch letztere in Anlage an einen Ringbund des Aufnahmegefäßes formschlüssig anlegbar ist, wobei sich weiter in Entnahmerichtung an die Schulter ein Bereich des Einbringpfostens anschließt, der mit einem dem Einsetzen des Implantats dienenden Werkzeug in zugleich drehfesten Formschluß und axialen Reib- und/oder Formschluß bringbar ist. Sie betrifft ferner ein solches Aufnahmegefäß,

Bei einem bekannten Montagesatz besteht der Einbringpfosten aus einem Bauteil, welches etwa in der Mitte seiner Längserstreckung zwischen zwei Ringbunden einen O-Ring trägt, der die Ringbunde radial überragt und gegenüber einem rohrförmigen, an einem Ende verschlossenen Aufnahmegefäß abdichtet, wenn er in dieses eingesetzt ist. Auf den dem geschlossenen Ende des Aufnahmegefäßes zugewandten Ringbund folgt ein zylindrischer Ansatz, dessen Durchmesser größer ist als der des Implantats, welches von der im Innern des Einbringpfostens versenkten Schraube gegen ihn gezogen wird; zugleich dient der Ansatz als Führung für ein ihn und das Implantat umgebendes Röhrchen, das zwischen dem dem Ansatz benachbarten Ringbund und dem geschlossenen Ende des Aufnahmegefäßes gehalten ist und das Implantat insbesondere während jeglichen Transports bis zur Entnahme des Montagesatzes aus dem Aufnahmegefäß schützt. Das Röhrchen besteht ebenso wie der Einbringpfosten (und das Implantat selbst) regelmäßig aus Titan, also einem teuren Werkstoff.

Der andere Ringbund befindet sich, wenn der Montagesatz im Aufnahmegefäß aufgenommen ist, in der Nähe dessen offenen Endes. An ihn schließt sich vor allem ein zur Aufnahme eines mit ihm drehfest in Eingriff bringbaren Drehschlüssels geeigneter Bereich an; dieser Bereich befindet sich bereits außerhalb des Aufnahmegefäßes. Bis kurz vor dem Einsetzen des Implantats ist das Aufnahmegefäß mit dem darin befindlichen, aber mit einem Teil des Einbringpfostens aus ihm herausragenden Montagesatz in ein ebenfalls rohrförmiges Transportgehäuse eingeschoben, welches ebenso wie das Aufnahmegefäß aus Kunststoff besteht. Es ist ebenfalls rohrförmig und an einem Ende verschlossen, während das andere Ende von einem lösbaren, aber bis zum Gebrauch versiegelten Deckel verschlossen ist. Am Boden des Transportgehäuses befindet sich zwischen diesem und dem Boden des Aufnahmegefäßes ein ebenfalls gefäßförmiger Halter für die Verschlußschraube, welche nach dem Einschrauben des Implantats dessen Aufnahmebohrung für die Zahnprothese verschließt, bis das Implantat eingewachsen ist.

Diese bekannte Art der Unterbringung und Halterung des Montagesatzes im Aufnahmegefäß sowie dessen Unterbringung im Transportgehäuse hat sich zwar bewährt, befriedigt aber nicht alle Ansprüche. Zum einen ist der Materialaufwand für den Einbringpfosten, bei dem es sich um ein Wegwerfprodukt handelt, relativ hoch. Zum anderen erfordert die geschilderte Konstruktion einen großen Durchmesser des Einbringpfostens, der vor allem bei engen Zahnständen das Einschrauben des Implantats mit dem Einbringpfosten erschwert oder gar unmöglich macht. Schließlich ist auch das Schutzröhrchen für das Implantat ein Wegwerfprodukt, welches wegen des teuren Werkstoffes zusätzlich zu Buche schlägt, und überdies bedarf die Entnahme des Montagesatzes aus dem Aufnahmegefäß (nach dem Öffnen des Außengehäuses) einer mehrschrittigen Arbeitsfolge, welche die Arbeitszeit des Zahnarztes beim Einsetzen des Implantats verlängert und das Risiko hervorruft, daß die Anästhesiezeit nicht ausreicht. Zu allem kommt hinzu, daß die Sterilisierung des Montagesatzes sich auf den unterhalb des O-Rings befindlichen Raum im Aufnahmegefäß beschränkt, der auf der anderen Seite des O-Rings befindliche Teil des Einbringpfostens also nicht sterilisiert ist und überdies die Gefahr besteht, daß die Sterilisierung im Implantatbereich durch Leckagen am O-Ring vorbei aufgehoben wird. Darüber hinaus befindet sich die Verschlußschraube ebenfalls außerhalb des Aufnahmegefäßes im Außengehäuse.

Aus der US-PS 5 062 800 und WO 98/26726 ist ferner der eingangs beschriebene dentale Implantat-Montagesatz mit einem Aufnahmegefäß bekannt. Letzteres besteht aus einem unten verschlossenen Zylinderrohr, gegen dessen offenes oberes Stirnende eine Schulter des Einbringpfostens anlegbar ist. Dies erfordert einen relativ großen Durchmesser der Schulter (mit entsprechend erschwerter Handhabung des Einbringpfostens) und erlaubt ferner keine vom Einbringpfosten unabhängige Abdichtung des steril zu haltenden Raumes um das Implantat.

Dieser Problematik will die Erfindung abhelfen. Sie besteht darin, daß der Ringbund von einem radial eingezogenen und den Querschnitt des Aufnahmegefäßes (3) auf einen etwas größeren Durchmesser als dem des zylindrischen Abschnitts verengenden Teil des Aufnahmegefäßes gebildet ist und der zylindrische Abschnitt einen geringfügig größeren Durchmesser als der des Implantats hat.

Der auf diese Weise durchweg schlanke Montagesatz, dessen größter Durchmesser - nämlich der der Schulter - den Durchmesser des Implantats nur wenig übersteigt, läßt sich mit Hilfe des reibschlüssig auf den Einbringpfosten aufgesetzten Werkzeuges entnehmen und infolge des gleichzeitig hergestellten drehfesten Eingriffs unmittelbar zu der das Implantat aufnehmenden Kieferbohrung führen. Das Implantat radial überragende Bereiche des Einbringpfostens, welche bei engen Zahnständen mit den Nachbarzähnen kollidieren könnten, existieren nicht. Auch ist der Verbrauch von teurem Werkstoff für den nur einmal verwendbaren Einbringpfosten auf ein Minimum reduziert; das im Stand der Technik verwendete Schutzröhrchen entfällt gänzlich.

Besonders vorteilhaft ist das Zusammenwirken des erfindungsgemäßen Montagesatzes mit einem Aufnahmegefäß, das aus einem endseits mittels Stopfen verschließbarem Rohr besteht, welches in Höhe des den Querschnitt verengenden Teils umlaufend radial eingezogen ist. Der im Durchmesser verengte Rohrbereich nimmt den zylindrischen Abschnitt des Einbringpfostens auf, und an seinem einen Ende legt sich die auf den zylindrischen Abschnitt folgende Schulter an, so daß der Montagesatz sicher im Aufnahmegefäß gehalten ist, wenn das entnahmeseitige Ende des Rohres von einem Stopfen verschlossen ist, welcher bevorzugt eine zentrische, dem Rohrinnern zugewandte Ausnehmung aufweist, die im Aufnahmezustand den entnahmeseitigen Endteil des Einbringpfostens umgibt.

Vorteilhaft besteht das Rohr des Aufnahmegefäßes aus Glas, welches bekannte Sterilisierungsvorteile besitzt. Es kann auch auf dem dem entnahmeseitigen Ende gegenüberliegenden Ende durch einen Stopfen verschlossen sein, und dieser hat bevorzugt eine dem Rohrinnern zugewandte Ausnehmung zur Aufnahme der Verschlußschraube für das Implantat. Auf diese Weise befindet sich der Montagesatz insgesamt und zusätzlich auch die Verschlußschraube im sterilisierten Bereich. Für den Transport ist das Aufnahmegefäß - wie herkömmlich - von einem Transportgehäuse mit versiegelbarem Deckel umgeben. Es ist aber auch möglich, das Aufnahmegefäß aus Kunststoff oder Metall, beispielsweise Titan, zu fertigen.

Ein mögliches Werkzeug zum Einschrauben des neuen Montagesatzes weist einen rohrförmigen Abschnitt mit einem Schlüssel-Sechskant am freien Ende der Innenwand und anschließend einen Rohrdurchmesser auf, der bei Wirkverbindung mit dem Endteil des Einbringpfostens einen Reibschluß mit diesem herstellt. Auf diese Weise läßt sich die gleichzeitig drehfeste und axial reibschlüssige Verbindung zwischen dem Werkzeug und dem Einbringpfosten bei der Entnahme des Montagesatzes aus dem Aufnahmegefäß auf einfache Weise gewährleisten. Im übrigen kann das Werkzeug weitere Abschnitte mit Querschnittskonfigurationen zum Ansetzen von Drehschlüsseln wie Ratschen o. dgl. - oder auch ein Innengewinde zur Befestigung eines Drehtellers - aufweisen.

Das mögliches Verfahren zum Einsetzen eines Schraubimplantats besteht darin, daß nach der Entfernung des entnahmeseitigen Verschlußstopfens des Aufnahmegefäßes das Werkzeug mit seinem Endteil über den Bereich des Einbringpfostens geführt und gegen die Reibkraft zwischen diesem und der Rohrinnenwand die komplementären Sechskante in Eingriff miteinander gebracht werden, daß hierauf der Montagesatz mit dem Werkzeug aus dem Aufnahmegefäß herausgezogen und in den (mit einer Vorbohrung versehenen) Kiefer eingeschraubt wird, wonach die Schraubverbindung zwischen dem Implantat und dem Einbringpfosten gelöst und der Einbringpfosten abgezogen wird.

Die Zeichnung veranschaulicht die Erfindung an einem Ausführungsbeispiel, und zwar zeigt:
- Fig. 1: vergrößert einen in ein Aufnahmegefäß und ein Transportgehäuse eingesetzten Montagesatz (nebst Verschlußschraube) im zentralen Längsschnitt;
- Fig. 2: ein Entnahmewerkzeug in weiter vergrößerter Seitenansicht, Schnitt und Draufsicht; und
- Fig. 3: die Schrittfolge zur Entnahme des Montagesatzes aus dem Aufnahmegefäß.

In einem Transportgehäuse 1 aus beispielsweise transparentem Kunststoff, welches mit einem - in üblicher Weise versiegelten - Stopfen 2 (ebenfalls aus Kunststoff) verschlossen ist, befindet sich ein im Ganzen mit 3 bezeichnetes Aufnahmegefäß. Es besteht aus einem Glasrohr 4, dessen beidseits offene Enden mittels Verschlußstopfen 5 bzw. 6 verschlossen sind. Im Aufnahmegefäß 3 befindet sich der aus dem Einbringpfosten 7 und dem Implantat 8 bestehende Montagesatz.

Das Schraubimplantat 8 ist mit dem im wesentlichen rohrförmigen Einbringpfosten 7 durch eine in dessen Innenraum gesteckte Schraube 9 verbunden, deren Gewinde in das im Implantat vorgesehene Innengewinde 10 eingreift; letzteres dient nach dem Einsetzen des Implantats 8 in einen Kiefer zur Aufnahme des Gewindes einer Verschlußschraube 11, welche in einer Ausnehmung 12 des Verschlußstopfens 6 untergebracht ist und bereitgehalten wird.

Der Einbringpfosten 7 hat im Anschluß an einen endseitigen, in das Implantat 8 eingreifenden Zentrierbundes 13 einen zylindrischen Abschnitt 14 mit einer sich in Entnahmerichtung anschließenden Schulter 15. Im (dargestellten) eingesetzten Zustand befindet sich der zylindrische Abschnitt 14 innerhalb eines Durchlasses 16 im Rohr 4, welcher dort durch den Innenumfang eines verengten Teils 17 gebildet ist. Die Schulter 15 liegt oberhalb des Durchlasses 16 an der verengten Wandung des Rohres 4 an.

Weiter in Entnahmerichtung folgt auf die Schulter 15 ein Bereich 18 des Einbringpfostens 7, welcher aus einem Schlüssel-Sechskant 19 und einem längsgeschlitzten (Schlitz 21) Endteil 20 besteht. Letzteres hat an seinem freien Ende eine ringförmige Durchmesserverdickung 22.

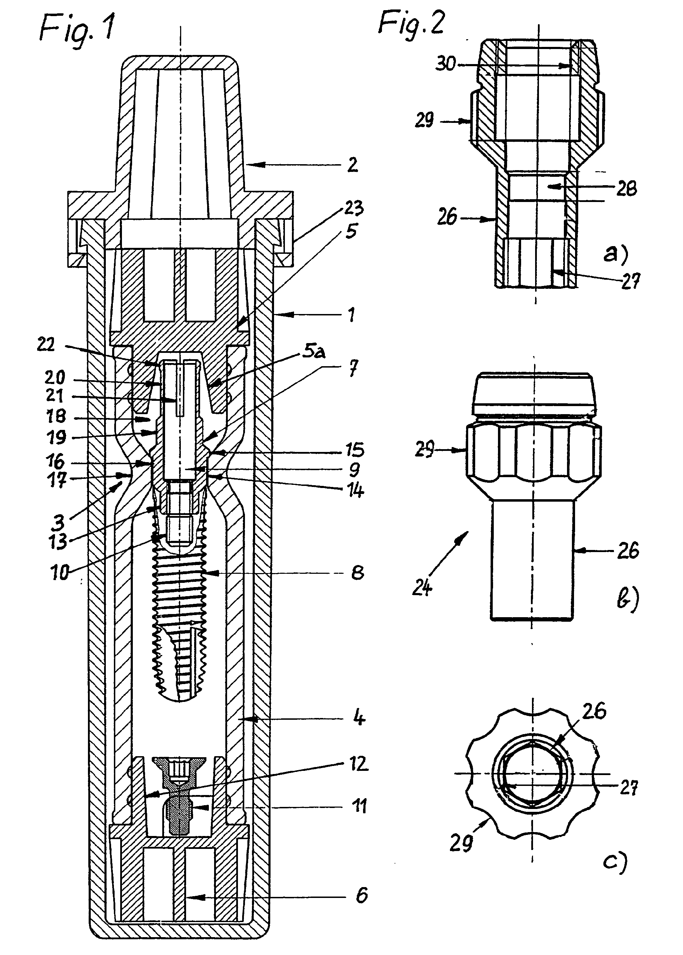

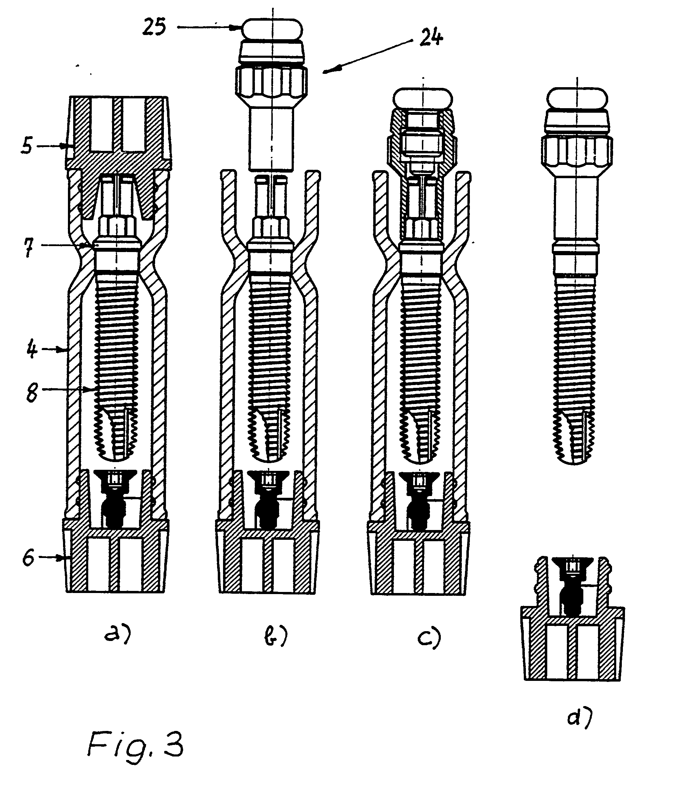

Wenn das Implantat 8 in einen Kiefer eingesetzt und fixiert werden soll, wird zunächst der Deckel 2 - unter Aufbrechen des Siegels 23 - vom Transportgehäuse entfernt und das Aufnahmegefäß 3 entnommen (Fig. 3 a). Alsdann wird das Aufnahmegefäß 3 durch Abnehmen des Verschlußstopfens 5 geöffnet, und gemäß Fig. 3 b wird ein Werkzeug in Form des in Fig. 2 stark vergrößert dargestellten Einbringschlüssels 24 über den Bereich 18 des Einbringpfostens 7 geführt, der mit dem Implantat 8 als Montagesatz nach wie vor im Rohr 4 gehalten ist (in Fig. 3 b ist in den Einbringschlüssel 24 bereits ein Drehteller 25 eingeschraubt worden). Dabei gelangt der Schlüssel-Sechskant 19 des Einbringpfostens 7 in Eingriff mit dem rohrförmigen Abschnitt 26 des Einbringschlüssels 24, welcher an seinem freien Ende innenseitig einen dem Sechskant 19 entsprechenden Sechskant 27 aufweist. Gleichzeitig legt sich die ringförmige Durchmesser-Verdickung 22 am freien Ende des Einbringpfostens 7 aufgrund entsprechenden Durchmesser-Verhältnisses an die geringfügig gestufte, an den Sechskant 27 anschließenden Abschnitt 28 der Innenwandung des rohrförmigen Abschnitts 26 des Einbringschlüssels 24 an. Der dadurch entstehende Reibschluß zwischen dem Einbringpfosten 7 und dem Einbringschlüssel 24 erlaubt es, mit letzterem den Montagesatz aus dem Rohr 4 des Aufnahmegefäßes 3 in axialer Entnahmerichtung herauszuziehen (Fig. 3 d). Ohne einen weiteren Zwischenschritt kann dann das Implantat 8 in die Vorbohrung des Kiefers eingeschraubt werden, und zwar entweder von Hand mittels eines auf den Abschnitt 29 des Einbringschlüssels 24 (Fig. 2 b und c) aufgesetzten Drehschlüssels (Ratsche o. dgl.), ggf. unter Zuhilfenahme des Drehtellers 25, oder auch maschinell.

Nach Beendigung des Einschraubvorganges wird die Schraube 9, welche das Implantat 8 mit dem Einbringpfosten 7 zum Montagesatz verbindet, mit Hilfe eines entsprechenden Schlüssels gelöst und entfernt. Zu diesem Zweck wird der Einbringschlüssel 24 vom Einbringpfosten 7 abgezogen; es ist jedoch auch möglich - gegebenenfalls nach Entfernen des Drehtellers 25 aus dem Innengewinde 30 des Einbringschlüssels 24 - den Schlüssel für die Schraube 9 durch den Einbringschlüssel 24 hindurch mit der Schraube 9 in Eingriff zu bringen und den Einbringpfosten 7 gemeinsam mit dem Einbringschlüssel 24 vom eingeschraubten Plantat 8 abzuziehen. Abschließend wird die Verschlußschraube 11 der Ausnehmung 7 des Stopfens 6 entnommen und in das Innengewinde 10 des Implantats 8 eingeschraubt, um das Gewinde 10 bis zum späteren - nach dem Einwachsen des Implantats 8 erfolgenden - Aufschrauben der Dentalprothese zu schützen und sauberzuhalten.

## Patentansprüche

1. Montagesatz mit einem Dentalimplantat zur Befestigung von Zahnersatz am Kiefer, bei dem das Implantat mittels einer zentrischen Verschraubung mit einem Einbringpfosten verbunden ist, welcher Mittel zu seiner Halterung in einem das Implantat konzentrisch umgebenden Aufnahmegefäß aufweist, die aus einem zylindrischen Abschnitt und einer in Entnahmerichtung anschließenden Schulter bestehen, welch letztere in Anlage an einen Ringbund des Aufnahmegefäßes formschlüssig anlegbar ist,
wobei sich weiter in Entnahmerichtung an die Schulter ein Bereich des Einbringpfostens anschließt, der mit einem dem Einsetzen des Implantats dienenden Werkzeug in zugleich drehfesten Formschluss und axialen Reib- und/oder Formschluss bringbar ist,
**dadurch gekennzeichnet, dass** der Ringbund von einem radial eingezogenen und den Querschnitt des Aufnahmegefäßes (3) auf einen etwas größeren Durchmesser als dem des zylindrischen Abschnitts verengenden Teil (17) des Aufnahmegefäßes (3) gebildet ist und der zylindrische Abschnitt (14) einen geringfügig größeren Durchmesser als der des Implantats (8) hat.

2. Montagesatz nach Anspruch 1,
**dadurch gekennzeichnet, dass** der Bereich (18) des Einbringpfostens (7) aus einem Schlüssel-Sechskant (19) und einem achsparallel längsgeschlitzten (Schlitz 21) rohrförmigen Endteil (20) mit einer ringförmigen Durchmesser-Verdickung (22) am freien Ende besteht.

3. Aufnahmegefäß für einen Montagesatz nach Anspruch 1 oder 2, umfassend einen Ringbund zum formschlüssigen Anlegen einer Schulter eines Einbringpfostens eines Dentalimplantats,
**dadurch gekennzeichnet, dass** es aus einem endseits mittels Stopfen (5, 6) verschließbaren Rohr (4) besteht, welches zur Bildung des Ringbundes durch ein den Querschnitt verengenden Teil (17) umlaufend radial eingezogen ist.

4. Aufnahmegefäß nach Anspruch 3,
**dadurch gekennzeichnet, dass** das Rohr (4) aus Glas besteht.

5. Aufnahmegefäß nach Anspruch 3 oder 4,
**dadurch gekennzeichnet, dass** der das entnahmeseitige Ende des Rohres (4) verschließende Stopfen (5) eine zentrische, dem Rohrinnern zugewandte Ausnehmung (5a) aufweist, die im Aufnahmezustand den entnahmeseitigen Endteil (20) des Einbringpfostens (7) umgibt.

6. Aufnahmegefäß nach einem der Ansprüche 3 bis 5,
**dadurch gekennzeichnet, dass** auch das der Entnahmeseite gegenüberliegende Ende des Rohres (4) einen Verschlussstopfen (6) aufnimmt und dieser eine dem Rohrinnern zugewandte Ausnehmung (12) zur Aufnahme einer Verschlussschraube (11) für das Implantat (8) aufweist.

## Claims

1. A mounting assembly comprising a dental implant for fixing a dental prosthesis to the jaw, in which the implant is connected by means of a central screw connection to an insertion post which has means for it to be held in a holding container concentrically surrounding the implant, which means consist of a cylindrical portion and a shoulder adjoining it in the withdrawal direction, which shoulder may be placed in abutment in a positively locking manner against an annular flange of the holding container,
wherein, furthermore, a region of the insertion post adjoins the shoulder in the withdrawal direction, which region may be brought into rotationally-fixed positive locking and, at the same time, axial frictional locking and/or positive locking with a tool serving to install the implant,
**characterised in that** the annular flange is formed by a radially drawn-in part (17) of the holding container (3) narrowing the cross-section of the holding container (3) to a somewhat larger diameter than that of the cylindrical portion, and the cylindrical portion (14) has a slightly larger diameter than that of the implant (8).

2. A mounting assembly according to Claim 1,
**characterised in that** the region (18) of the insertion post (7) is composed of a key hexagon (19) and a tubular end part (20) slotted longitudinally (slot 21) parallel to the axis with an annular thickening (22) of the diameter at the free end.

3. A holding container for a mounting assembly according to Claim 1 or 2, comprising an annular flange for the positive-locking placement thereon of a shoulder of an insertion post of a dental implant,
**characterised in that** it consists of a tube (4), closable at the ends by means of stoppers (5, 6), which in order to form the annular flange is drawn-in radially around the circumference by means of a part (17) narrowing the cross-section.

4. A holding container according to Claim 3,
**characterised in that** the tube (4) is made of glass.

5. A holding container according to Claim 3 or 4,
**characterised in that** the stopper (5) closing the end of the tube (4) on the withdrawal side has a central recess (5a) directed towards the tube interior, which in the holding state surrounds the end part (20) of the insertion post (7) on the withdrawal side.

6. A holding container according to one of Claims 3 to 5,
**characterised in that** the end of the tube (4) opposite the withdrawal side also holds a closing stopper (6) and the said stopper has a recess (12) directed towards the tube interior to hold a closing screw (11) for the implant (8).

## Revendications

1. Kit de montage comportant un implant dentaire pour la fixation d'une prothèse sur la mâchoire dans lequel l'implant est raccordé à une tige d'insertion au moyen d'un vissage centré, lequel comporte des moyens pour sa fixation dans un conteneur entourant l'implant de manière concentrique, moyens qui sont composés d'une section cylindrique et d'un épaulement consécutif dans le sens du retrait, ce dernier pouvant être placé, par coopération de formes, en appui sur un collet circulaire du conteneur,
une zone de la tige d'insertion se rattachant à l'épaulement plus loin dans le sens du retrait, zone qui peut être amenée, avec un outil servant à l'insertion de l'implant, à la fois dans un engagement par coopération de formes résistant à la torsion et un engagement par friction et/ou un engagement par coopération de formes axial,
**caractérisé en ce que** le collet annulaire est formé d'une partie (17), du conteneur (3) , insérée dans le sens radial et rétrécissant la section transversale du conteneur (3) à un diamètre légèrement supérieur à celui de la section cylindrique et la section cylindrique (14) comporte un diamètre légèrement supérieur à celui de l'implant (8).

2. Kit de montage selon la revendication 1, **caractérisé en ce que** la zone (18) de la tige d'insertion (7) est composée d'un hexagone de clé (19) et d'une partie d'extrémité tubulaire (20) fendue dans le sens de la longueur (fente 21) parallèlement à l'axe avec un épaississement du diamètre annulaire (22) sur l'extrémité libre.

3. Conteneur pour un kit de montage selon la revendication 1 ou 2, comportant un collet annulaire pour l'application par coopération de formes d'un épaulement d'une tige d'insertion d'un implant dentaire,
**caractérisé en ce qu'**il est composé d'un tube (4) pouvant être bouché d'un côté au moyen de tampons (5, 6), lequel tube est inséré dans le sens radial, de manière circulaire, à travers une pièce (17) rétrécissant la section transversale pour la formation du collet annulaire.

4. Conteneur selon la revendication 3, **caractérisé en ce que** le tube (4) est composé de verre.

5. Conteneur selon la revendication 3 ou 4, **caractérisé en ce que** le tampon (5) obturant l'extrémité côté retrait du tube (4) comporte un creux (5a) centré, tourné vers l'intérieur du tube, creux qui entoure, à l'état de réception, la partie d'extrémité côté retrait (20) de la tige d'insertion (7).

6. Conteneur selon l'une quelconque des revendications 3 à 5, **caractérisé en ce que** même l'extrémité du tube (4), opposée au côté du retrait, loge un tampon d'obturation (6) et celui-ci comporte un creux (12) tourné vers l'intérieur du tube pour la réception d'une vis de blocage (11) pour l'implant (8).
